# EUROPEAN PATENT APPLICATION

(11) **EP 3 447 661 A1**
(43) Date of publication of application: **27.02.2019**
(21) Application number: 17785587.1
(22) Date of filing: 24.01.2017
(51) Int. Cl.: G06F 17/30, G06N 3/08, G06N 99/00

(54) **INFORMATION PROCESSING DEVICE AND INFORMATION PROCESSING METHOD**

(30) Priority: 19.04.2016 JP 2016083606
(71) Applicant: Sony Corporation, Tokyo 108-0075 (JP)
(72) Inventor: NARIHIRA, Takuya, Tokyo 108-0075 (JP); FUJITA, Takuya, Tokyo 108-0075 (JP); NAKAMURA, Akira, Tokyo 108-0075 (JP)
(74) Representative: MFG Patentanwälte Meyer-Wildhagen Meggle-Freund Gerhard PartG mbB
(86) International application number: PCT/JP2017/002287
(87) International publication number: WO 2017/183242

(57) **Abstract**

[Object] To provide a mechanism that can perform learning of a neural network more efficiently.

[Solution] An information processing apparatus including: an acquisition section configured to acquire a semantic network, identification information of data, and a label; and a learning section configured to learn a classification model that classifies the data into the label, on a basis of the semantic network, the identification information, and the label that have been acquired by the acquisition section.

## Description

### Technical Field

The present disclosure relates to an information processing apparatus and an information processing method.

### Background Art

In recent years, technologies that execute computations such as prediction or recognition using a model constructed by machine learning are being used widely. In particular, by the progress of hardware in recent years, technologies related to a multilayer neural network referred to as deep learning are actively developed. For example, in Non-Patent Literature 1 described below, there is disclosed a technology of causing an intermediate layer to function as an object detector in the process of learning a scene recognition device mounted in a Convolutional Neural Network (CNN), which is one type of deep learning.

### Citation List

### Non-Patent Literature

Non-Patent Literature 1: Bolei Zhou, Aditya Khosla, Agata Lapedriza, Aude Oliva, Antonio Torralba, "OBJECT DETECTORS EMERGE IN DEEP SCENE CNNS", Published as a conference paper at ICLR 2015.

### Disclosure of Invention

### Technical Problem

By the progress of the machine learning technology, it has become possible to model the concept of a human to some extent. Nevertheless, because the concept of a human is wide, a mechanism that can perform learning of a neural network more efficiently is desired to be provided.

### Solution to Problem

According to the present disclosure, there is provided an information processing apparatus including: an acquisition section configured to acquire a semantic network, identification information of data, and a label; and a learning section configured to learn a classification model that classifies the data into the label, on a basis of the semantic network, the identification information, and the label that have been acquired by the acquisition section.

In addition, according to the present disclosure, there is provided a method executed by a processor, the method including: acquiring a semantic network, identification information of data, and a label; and learning a classification model that classifies the data into the label, on a basis of the semantic network, the identification information, and the label that have been acquired.

### Advantageous Effects of Invention

As described above, according to the present disclosure, a mechanism that can perform learning of a neural network more efficiently is provided. Note that the effects described above are not necessarily limitative. With or in the place of the above effects, there may be achieved any one of the effects described in this specification or other effects that may be grasped from this specification.

### Brief Description of Drawings

FIG. 1 is an explanatory diagram for describing an overview of a neural network.
FIG. 2 is a diagram illustrating an example of a tendency of an ignition status of an intermediate layer of each image category.
FIG. 3 is a diagram illustrating an example of a tendency of an ignition status of an intermediate layer of each image category.
FIG. 4 is a diagram illustrating an example of a diagrammatic configuration of a system according to an embodiment of the present disclosure.
FIG. 5 is a diagram illustrating an example of a semantic network.
FIG. 6 is a flowchart illustrating an example of a brief flow of a learning process executed in the system according to the embodiment.
FIG. 7 is a diagram illustrating an example of a detailed flow of the learning process executed in the system according to the embodiment.
FIG. 8 is a diagram illustrating an example of a UI according to the embodiment.
FIG. 9 is a diagram illustrating an example of a UI according to the embodiment.
FIG. 10 is a diagram illustrating an example of a UI according to the embodiment.
FIG. 11 is a diagram illustrating an example of a UI according to the embodiment.
FIG. 12 is a diagram illustrating an example of a UI according to the embodiment.
FIG. 13 is a diagram illustrating an example of a UI according to the embodiment.
FIG. 14 is a diagram illustrating an example of a UI according to the embodiment.
FIG. 15 is a diagram illustrating an example of a UI according to the embodiment.
FIG. 16 is a diagram illustrating an example of a UI according to the embodiment.
FIG. 17 is a diagram illustrating an example of a UI according to the embodiment.
FIG. 18 is a diagram illustrating an example of a UI according to the embodiment.
FIG. 19 is a diagram illustrating an example of a UI according to the embodiment.
FIG. 20 is a diagram illustrating an example of a UI according to the embodiment.
FIG. 21 is a diagram illustrating an example of a UI according to the embodiment.
FIG. 22 is a diagram illustrating an example of a UI according to the embodiment.
FIG. 23 is a diagram illustrating an example of a UI according to the embodiment.
FIG. 24 is a block diagram illustrating an example of a hardware configuration of an information processing apparatus according to the embodiment.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

In addition, in this specification and the appended drawings, components that have substantially the same function and structure are sometimes distinguished from each other by postfixing the same reference numerals with different alphabets. For example, a plurality of components that have substantially the same function and structure are distinguished from each other as necessary like clusters 20A, 20B, and 20C. Nevertheless, in a case where a plurality of components that have substantially the same function and structure need not be specifically distinguished from each other, these components are denoted only with the same reference numerals. For example, in a case where the clusters 20A, 20B, and 20C need not be specifically distinguished from each other, they are simply referred to as the clusters 20.

Note that, the description will be given in the following order.
1. Introduction
   1.1. Neural network
   1.2. Tendency of ignition status of intermediate layer
2. Exemplary configuration
   2.1. Exemplary configuration of system
   2.2. Exemplary configuration of server
   2.3. Exemplary configuration of terminal apparatus
3. Technical feature
   3.1. Classification model
   3.2. Learning
   3.3. Interactive learning
   3.4. UI example
      3.4.1. First algorithm
      3.4.2. Second algorithm
      3.4.3. Supplement
   3.5. Modified example
4. Hardware configuration example
5. Conclusion

### <<1. Introduction>>

### <1.1. Neural network>

A neural network is a model imitating a cranial nerve circuit of a human, and is a technique that seeks to realize, on a computer, a learning ability possessed by a human. One of the features of the neural network is to possess a learning ability. In the neural network, artificial neurons (nodes) that form a network by the bonding of synapses can acquire a problem solving ability by varying bond strength of synapses by learning. In other words, the neural network can automatically deduce a problem solving rule by repeatedly performing learning.

Examples of learning that uses the neural network include image recognition and speech recognition. In the neural network, for example, by repeatedly learning handwritten number patterns, it becomes possible to classify input image information into any of the numbers from 0 to 9. The learning ability possessed by the neural network as described above attracts attention as a key for promoting the development of artificial intelligence. In addition, a pattern recognition ability possessed by the neural network is expected to be applied in various industrial fields.

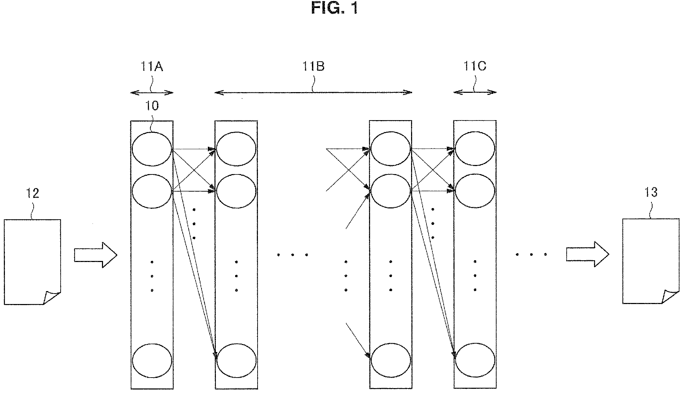

FIG. 1 is an explanatory diagram for describing an overview of a neural network. The neural network illustrated in FIG. 1 has a configuration in which a plurality of layers 11 including a plurality of nodes 10 are bonded by links between the nodes 10. The links between the nodes 10 correspond to synapses, and weight corresponding to bond strength is allocated. A layer 11A is also referred to as an input layer, and input information 12 is input thereto. A layer 11C is also referred to as an output layer, and output information 13 is output therefrom. A layer 11B is also referred to as an intermediate layer, and transmits information (e.g. signal) input from the input layer 11A, toward the output layer 11C. Typically, each of the nodes 10 calculates a weighted sum obtained by multiplying signals output from the nodes 10 on the input layer 11A side that are linked to itself, by weight of each link. Then, the node 10 compares the calculated weighted sum with a threshold value, and outputs, to the nodes 10 on the output layer 11C side that are linked to itself, different signals between a case where the weighted sum exceeds the threshold value and a case where the weighted sum does not exceed the threshold value. Typically, in a case where the weighted sum does not exceed the threshold value, a signal is not output (i.e. zero is output). Note that, exceeding the threshold value is also referred to as igniting. From the input layer 11A to the output layer 11C through the intermediate layer 11B, the aforementioned computation is repeatedly performed, and the output information 13 is output. In this manner, computation of the neural network is performed.

On the other hand, in learning, parameters of the neural network (weight of each link, and a threshold value of each of the nodes 10) become learning targets. Furthermore, the addition or deletion of nodes can also be performed in the learning. As learning methods, there are an error backpropagation method and the like.

In the present embodiment, the description will be given assuming a Convolutional Neural Network (CNN) as a neural network, but another arbitrary neural network may be applied. Note that, the CNN is a feedforward neural network in which layers are not totally bonded, and is widely used in the field of image recognition.

In the learning of CNN, a learning data set represented by IMAGENET, for example, can be used. The IMAGENET is an aggregate of training images in 1000 categories (i.e., labels), and is a learning data set including about 1000 training images for one category. The CNN that has performed learning using the IMAGENET has 1000 nodes in an output layer, for example, and it becomes possible to categorize an unknown image into any of the 1000 categories on the basis of which of the 1000 nodes ignites.

### <1.2. Tendency of ignition status of intermediate layer>

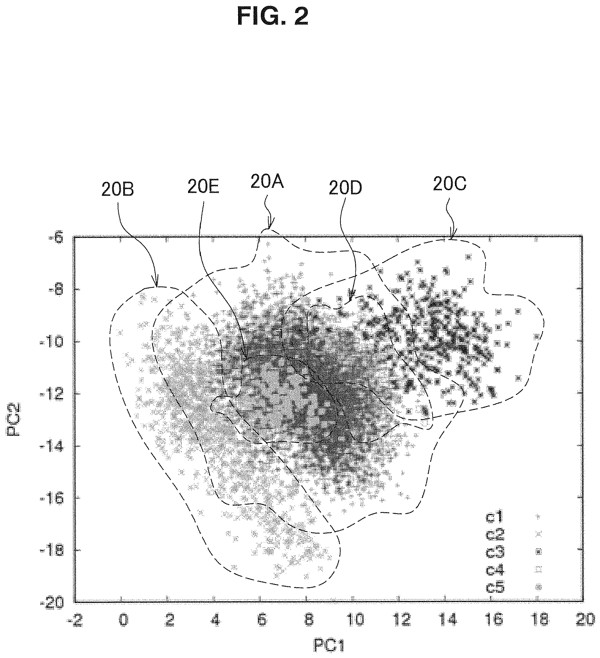

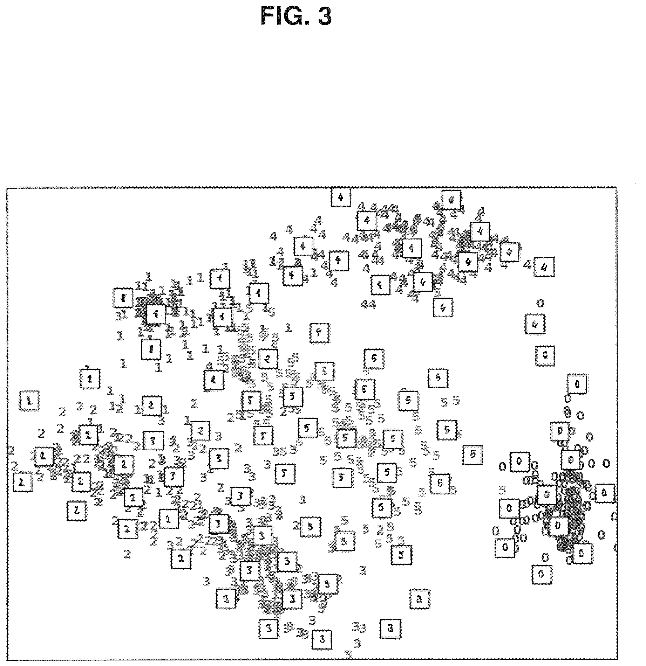

For example, in Non-Patent Literature 1 described above, there is disclosed a technology of causing an intermediate layer to function as an object detector in the process of learning a scene recognition device mounted in a CNN. In this manner, aside from the output from an output layer, the tendency of an ignition status that is specific to certain input information is sometimes seen in an intermediate layer. For example, in an intermediate layer, the tendency of ignition statuses different for respective image categories can be seen. An example thereof will be described with reference to FIGS. 2 and 3.

FIG. 2 is a diagram illustrating an example of a tendency of an ignition status of an intermediate layer of each image category. FIG. 2 illustrates a state in which ignition statuses of a plurality of nodes constituting a certain intermediate layer are plotted in a two-dimensional coordinate. By using a two-dimensional compression technology (2D embedding), for example, it becomes possible to compress a 100-dimensional vector indicating ignition statuses of 100 nodes, into a two-dimensional vector, and visualize the vector. One plot corresponds to one image. The type of a plot corresponds to an image category. As illustrated in FIG. 2, because images in the categories of the same type tend to have close (i.e. similar) ignition statuses, the ignition statuses can be clustered for each image category into clusters 20A to 20E.

FIG. 3 is a diagram illustrating an example of a tendency of an ignition status of an intermediate layer of each image category. FIG. 3 also illustrates a state in which ignition statuses of a plurality of nodes constituting a certain intermediate layer are plotted in a two-dimensional coordinate. Especially, FIG. 3 is a diagram representing features of images using t-distributed stochastic neighbor embedding (t-SNE) as a secondary compression technology, in an image recognition problem of handwritten numbers. A plot with one number corresponds to one recognition target image. The number of a plot corresponds to a recognized number. Rectangles indicate images of handwritten numbers. The t-SNE is a technology of representing closeness between two points by a probability distribution, and compressing high-dimensional information to two-dimensional information so as to minimize a KL information amount (Kullback-Leibler divergence) of probability distributions of before and after the compression. As illustrated in FIG. 3, it can be seen that different clusters are formed for the respective different numbers.

As described above with reference to FIGS. 2 and 3, a tendency of an ignition status of an intermediate layer can vary for each image category. Thus, the present disclosure proposes performing learning while acquiring a new concept, depending on the tendency of an ignition status of an intermediate layer.

### «2. Exemplary configuration»

### <2.1. Exemplary configuration of system>

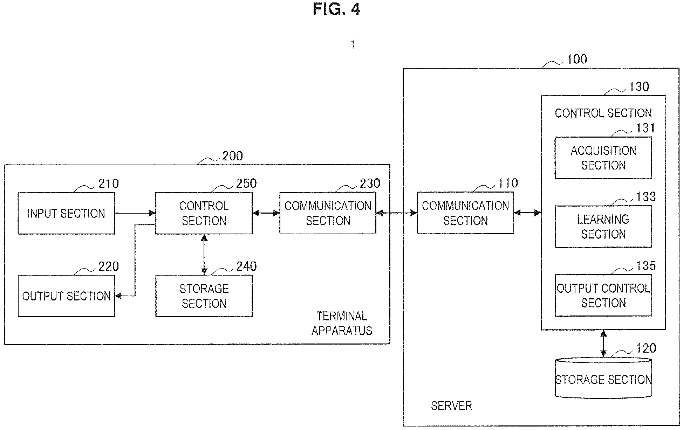

FIG. 4 is a diagram illustrating an example of a diagrammatic configuration of a system according to an embodiment of the present disclosure. As illustrated in FIG. 1, a system 1 includes a server 100 and a terminal apparatus 200.

The server 100 and the terminal apparatus 200 are connected by a network, and can communicate with each other. The network can include a cellular network, a wired local area network (LAN), a wireless LAN, or the like, for example.

The server 100 is an information processing apparatus that performs various processes. The terminal apparatus 200 is an information processing apparatus functioning as an interface with a user. Typically, the system 1 performs interaction with the user by cooperation between the server 100 and the terminal apparatus 200. For example, the terminal apparatus 200 provides an interface to the server 100 by a browser.

Subsequently, an exemplary configuration of each apparatus will be described.

### <2.2. Exemplary configuration of server>

As illustrated in FIG. 4, the server 100 includes a communication section 110, a storage section 120, and a control section 130.

### (1) Communication section 110

The communication section 110 includes a function of transmitting and receiving information. For example, the communication section 110 receives information from the terminal apparatus 200, and transmits information to the terminal apparatus 200.

### (2) Storage section 120

The storage section 120 temporarily or permanently stores programs and various data for the operation of the server 100.

### (3) Control section 130

The control section 130 provides various functions of the server 100. The control section 130 includes an acquisition section 131, a learning section 133, and an output control section 135. Note that, the control section 130 can further include another structural element other than these structural elements. In other words, the control section 130 can perform an operation other than the operations of these structural elements. The operations of the server 100 that are based on the control performed by the control section 130 will be described in detail later.

### <2.3. Exemplary configuration of terminal apparatus>

As illustrated in FIG. 4, the terminal apparatus 200 includes an input section 210, an output section 220, a communication section 230, a storage section 240, and a control section 250.

### (1) Input section 210

The input section 210 includes a function of receiving the input of information. For example, the input section 210 receives the input of information from a user. For example, the input section 210 may receive text input by a keyboard, touch panel, or the like, may receive voice input, or may receive gesture input. Otherwise, the input section 210 may receive data input from a storage medium such as flash memory.

### (2) Output section 220

The output section 220 includes a function of outputting information. For example, the output section 220 outputs information through images, sound, vibration, light emission, or the like.

### (3) Communication section 230

The communication section 230 includes a function of transmitting and receiving information. For example, the communication section 230 receives information from the server 100, and transmits information to the server 100.

### (4) Storage section 240

The storage section 240 temporarily or permanently stores programs and various data for the operation of the terminal apparatus 200.

### (5) Control section 250

The control section 250 provides various functions of the terminal apparatus 200. The terminal apparatus 200 operates on the basis of control performed by the control section 250. The operations of the terminal apparatus 200 that are based on the control performed by the control section 250 will be described in detail later.

### «3. Technical feature»

Subsequently, a technical feature of the system 1 according to the present embodiment will be described.

### <3.1. Classification model>

In the present embodiment, data is assumed to be classified using a classification model mounted in a neural network. When classification target data is input to the classification model, a concept by which the data is classified is output. For example, when an image of a cat is input, concepts such as "animal" and "cat" are output as a classification result.

A learning data set used for learning is an aggregate of combinations of data and labels indicating concepts corresponding to the data. Learning is performed such that a classification result output in a case where classification target data is input to a classification model, and a label match. It therefore becomes possible for a classification model obtainable after the learning, to classify classification target data into an associated label.

### <3.2. Learning>

### (1) Learning of classification model

The system 1 performs learning of a classification model. Especially, the system 1 according to the present embodiment performs learning of a classification model using a semantic network.

More specifically, the system 1 (e.g. the acquisition section 131) acquires a semantic network, identification information of classification target data, and a label. Then, the system 1 (e.g. the learning section 133) learns a classification model on the basis of the semantic network, the identification information, and the label that have been acquired. This enables efficient learning as described later.

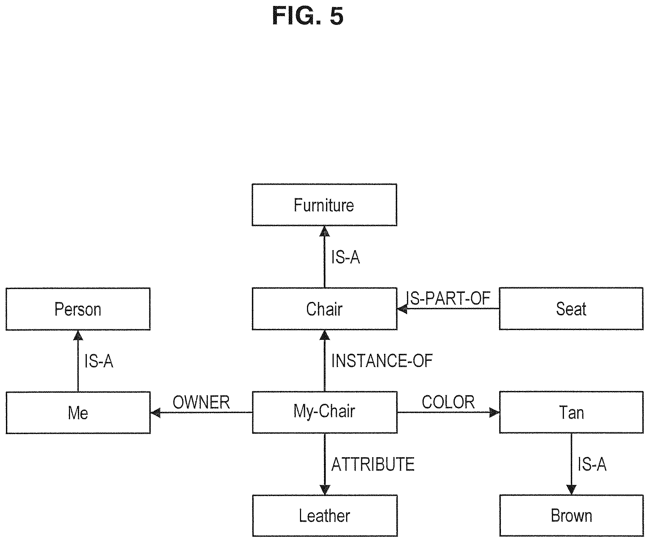

The semantic network is a model representing a structure of a memory held by a human. The semantic network will be described below with reference to FIG. 5.

FIG. 5 is a diagram illustrating an example of a semantic network. Characters in rectangles represent concepts, and correspond to the above-described labels. Hereinafter, the rectangles representing concepts will also be referred to as nodes. A directed link connecting nodes indicates a relationship between concepts of a node (hereinafter, also referred to as "X") at a starting point of the link, and a node (hereinafter, also referred to as "Y") at an end point of the link. In this manner, the semantic network is formed by nodes corresponding to concepts (labels), and links indicating relationships between concepts.

As a relationship between concepts, various relationships such as an IS-A relationship, an IS-PART-OF relationship , an INSTANCE-OF relationship, a COLOR relationship, an ATTRIBUTE relationship, and an OWNER relationship can be considered. The IS-A relationship is a relationship in which a condition that X is Y is satisfied. For example, in FIG. 5, such relationships that a chair is furniture, that tan is brown, and that me is a person are illustrated. The IS-PART-OF relationship is a relationship in which a condition that X is a part of Y or X of Y is satisfied. For example, in FIG. 5, such a relationship that a seat is a part of a chair and a relationship of a seat of a chair are illustrated. The INSTANCE-OF relationship is a relationship in which a condition that X is an example of Y is satisfied. For example, in FIG. 5, such a relationship that my chair is an example of a chair is illustrated. The COLOR relationship is a relationship in which a condition that X is a color of Y is satisfied. For example, in FIG. 5, such a relationship that a color of my chair is tan is illustrated. The ATTRIBUTE relationship is a relationship in which a condition that X is an attribute of Y is satisfied. For example, in FIG. 5, such a relationship that an attribute of my chair is leather is illustrated. The OWNER relationship is a relationship in which a condition that an owner of X is Y is satisfied. For example, in FIG. 5, such a relationship that an owner of my chair is me is illustrated.

Hereinafter, information indicating a relationship between nodes, that is to say, information indicating a relationship between concepts will also be referred to as semantic relationship information. In other words, a semantic network is information including concepts and pieces of semantic relationship information.

The system 1 (e.g. the learning section 133) learns using a learning criterion that is based on a relationship between nodes in the semantic network. For example, the system 1 uses a learning criterion obtained by applying an evaluation criterion in a classification algorithm that uses a Hierarchy and Exclusion (HEX) graph. The HEX graph is a graph indicating a relationship between concepts such as an exclusive relationship, an overlapping relationship, and an inclusion relationship between concepts. "Jia Dengy, Nan Ding, Yangqing Jia, Andrea Frome, Kevin Murphy, Samy Bengio, Yuan Li, Hartmut Neven, Hartwig Adam, "Large-Scale Object Classification using Label Relation Graphs"" describes in detail that classification can be efficiently performed by using the HEX graph. The system 1 according to the present embodiment performs learning considering whether a relationship between concepts in a semantic network is correctly included in a classification result obtained by a classification model. For example, in a case where two concepts in an exclusive relationship are included in a classification result, the system 1 decreases an evaluation value of the classification model. This excludes the classification model in which the relationship between concepts in the semantic network is not correctly represented. It therefore becomes possible to implement efficient learning.

### (2) Learning of semantic network

The system 1 (e.g. the learning section 133) learns a semantic network. Specifically, the system 1 adds a node to the semantic network, changes a node in the semantic network, or deletes a node from the semantic network, or adds a link to the semantic network, changes a link in the semantic network, or deletes a link from the semantic network.

Typically, the system 1 (e.g. the acquisition section 131) learns in accordance with a user input to the terminal apparatus 200. Input information corresponds to concepts and pieces of semantic relationship information, that is to say, corresponds to a semantic network. The system 1 learns a semantic network by, for example, bonding a semantic network input by the user, to a semantic network stored by itself, or partially replacing the stored semantic network with the input semantic network.

Aside from this, the system 1 may learn in accordance with an input from an apparatus on the Internet, for example.

### (3) labeling

The system 1 (e.g. the learning section 133) may perform data labeling (i.e.. association of labels with data) as one of learnings. For example, the system 1 performs data labeling on the basis of a user input.

### <3.3. Interactive learning>

### (1) Overview

The system 1 according to the present embodiment performs interactive learning. More specifically, the system 1 (e.g. the learning section 133) performs learning on the basis of a feedback to output information (i.e. user interface (UI)) regarding a learning result. The system 1 can efficiently perform learning by repeatedly receiving feedbacks in the process of learning. In addition, it is difficult to prepare a learning data set including all concepts, for modeling all the concepts, but it is possible to perform learning exceeding the range of a prepared learning data set, by performing learning while receiving feedbacks. The learning here includes the learning of a classification model, the learning of a semantic network, and labeling. Specific UI examples will be described in detail later.

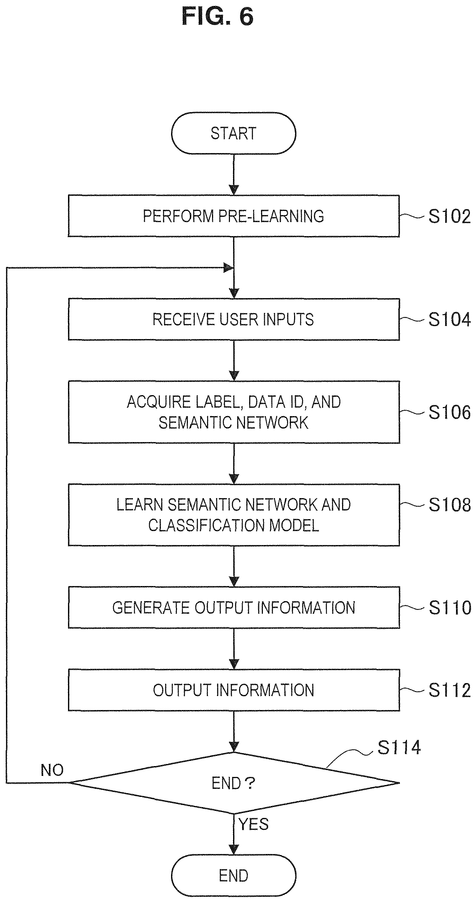

A brief flow of a learning process will be described below with reference to FIG. 6.

FIG. 6 is a flowchart illustrating an example of a brief flow of a learning process executed in the system 1 according to the present embodiment. As illustrated in FIG. 6, first of all, the system 1 (e.g. the learning section 133) performs pre-learning (step S102). For example, the system 1 performs learning of a classification model on the basis of the IMAGENET. After that, the system 1 (e.g. the acquisition section 131) acquires a label, a data ID (Identifier), and a semantic network (step S104). For example, the system 1 (e.g. the input section 210) acquires these pieces of information by receiving a user input of affixing one or more labels to data indicated by the data ID, and a user input of information indicating a relationship between a plurality of labels. Next, the system 1 (e.g. the learning section 133) performs learning of a semantic network and a classification model (step S106). For example, the system 1 learns a semantic network stored by itself, on the basis of an input semantic network. In addition, the system 1 learns the classification model on the basis of the input label, data indicated by the input data ID, and the learned semantic network. After that, the system 1 (e.g. the output control section 135) generates output information (step S110). Then, the system 1 (e.g. the output section 220) outputs information on the basis of the generated output information (step S112). After that, processes related to steps S104 to S112 are repeated (step S114/NO) until learning is ended (step S114/YES). In the repetitive process, a user input in step S104 becomes a feedback to an output in step S112.

In the above-described manner, the learning process ends.

### (2) Details

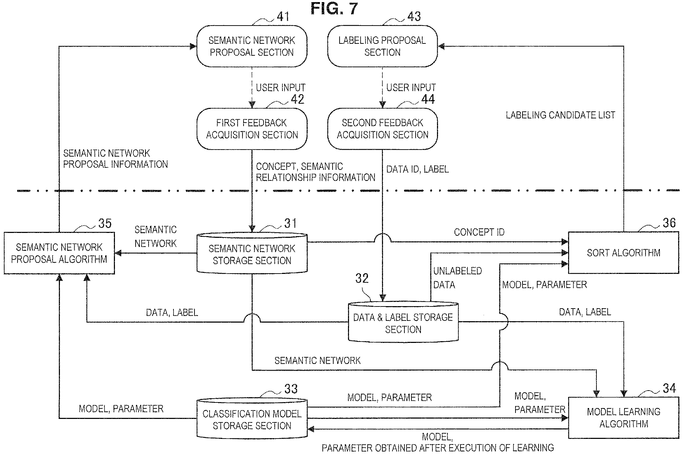

Subsequently, a detailed flow of the learning process will be described with reference to FIG. 7.

FIG. 7 is a diagram illustrating an example of a detailed flow of the learning process executed in the system 1 according to the present embodiment. Processes in an upper part in FIG. 7 are performed by the terminal apparatus 200, and processes in a lower part are performed by the server 100.

Cylindrical blocks in FIG. 7 correspond to databases (e.g. the storage section 120) included in the server 100. In addition, rectangular blocks indicate process blocks of the server 100. Note that, the storage section 120 corresponds to a semantic network storage section 31, a data & label storage section 32, and a classification model storage section 33. The learning section 133 corresponds to a model learning algorithm 34. The output control section 135 corresponds to a semantic network proposal algorithm 35 and a sort algorithm 36. The acquisition section 131 performs acquisition of information output from the terminal apparatus 200 to the server 100, and information from each storage section.

In addition, rounded rectangular blocks in FIG. 7 indicate process blocks of the terminal apparatus 200. The output section 220 corresponds to a semantic network proposal section 41 and a labeling proposal section 43. The input section 210 corresponds to a first feedback acquisition section 42 and a second feedback acquisition section 44.

A function of each block will be described below.

### • Semantic network storage section 31

The semantic network storage section 31 stores a semantic network. When concepts and pieces of semantic relationship information (i.e. semantic network) are input by the user in the first feedback acquisition section 42, the system 1 (e.g. the learning section 133) learns a semantic network stored in the semantic network storage section 31.

### • Data & label storage section 32

The data & label storage section 32 stores classification target data and a label in association with each other. For example, the data & label storage section 32 stores a data ID and a label that are output from the second feedback acquisition section 44, in association with each other. More specifically, the data & label storage section 32 newly associates an input label to data corresponding to an input data ID, and stores the data and the label. Note that, the system 1 (e.g. the acquisition section 131) may newly collect data from the Internet or the like, and store the data into the data & label storage section 32.

### • Classification model storage section 33

The classification model storage section 33 stores a model of a learned classification model (i.e. configuration of nodes) and parameters of the model (i.e. weight and threshold value). For example, the classification model storage section 33 stores a model and parameters that are output from the model learning algorithm 34.

### • Model learning algorithm 34

The model learning algorithm 34 is an algorithm that learns a classification model. The model learning algorithm 34 acquires a model and parameters from the classification model storage section 33, acquires a semantic network from the semantic network storage section 31, and acquires classification target data and a label associated with the data, from the data & label storage section 32. Then, the model learning algorithm 34 inputs, to a classification model including the acquired model and parameters, the acquired semantic network, and the acquired classification target data and the label, and performs learning. The model learning algorithm 34 outputs the model and the parameters that are obtained after the execution of learning, to the classification model storage section 33, and causes the model and the parameters to be stored therein.

### • Semantic network proposal algorithm 35

The semantic network proposal algorithm 35 is an algorithm for proposing a new semantic network to the user. The semantic network proposal algorithm 35 acquires a semantic network from the semantic network storage section 31, acquires classification target data and a label associated with the data, from the data & label storage section 32, and acquires a model and parameters from the classification model storage section 33. Then, the semantic network proposal algorithm 35 outputs semantic network proposal information to the terminal apparatus 200. The semantic network proposal information is information that proposes an input of a new semantic network. For example, the semantic network proposal information includes information regarding a learning result. Specifically, the semantic network proposal information may include output values of one or more units included in a neural network of a classification model. Typically, the output values are ignition statuses of an intermediate layer of a classification model that have been visualized by a two-dimensional compression technology such as the t-SNE. Furthermore, the semantic network proposal information may include a data list including data having similar ignition statuses of the intermediate layer of the classification model, that is to say, data included in the same cluster. In addition, the semantic network proposal information may include a co-occurrence histogram of labels. By these types of information regarding a learning result, it becomes possible to provide a reason for proposal to the user. It should be appreciated that the semantic network proposal information may include information that proposes a semantic network itself.

### • Sort algorithm 36

The sort algorithm 36 is an algorithm that sorts unlabeled data in accordance with a designated concept. Here, the unlabeled data may mean data associated with no label, or may mean data not associated with a label corresponding to the designated concept. The sort algorithm 36 acquires a concept ID from the semantic network storage section 31, acquires unlabeled data from the data & label storage section 32, and acquires a model and parameters from the classification model storage section 33. Then, the sort algorithm 36 outputs a labeling candidate list to the terminal apparatus 200. The labeling candidate list is information that proposes association of a new label with data, and is a list of unlabeled data that can be associated with a label corresponding to the acquired concept ID. For example, the sort algorithm 36 includes, in the labeling candidate list, unlabeled data classified by the classification model into a concept indicated by the concept ID, or unlabeled data having similar ignition statuses of the intermediate layer to data labeled with the concept indicated by the concept ID. In the labeling candidate list, sorting may be performed such that a priority order in the list becomes higher as an accuracy of being labeled becomes higher, or becomes more obscure. Note that, the labeling candidate list includes candidates of labels that can be associated.

### • Semantic network proposal section 41

The semantic network proposal section 41 proposes a new semantic network to the user. The semantic network proposal section 41 acquires semantic network proposal information from the semantic network proposal algorithm 35, and outputs the acquired semantic network proposal information to the user.

### • First feedback acquisition section 42

The first feedback acquisition section 42 receives an input of a feedback from the user to information output by the semantic network proposal section 41 to the user. For example, the first feedback acquisition section 42 receives an input of a feedback to the semantic network proposal information. Examples of feedbacks include an input of a new concept and/or an input of new semantic relationship information. Then, the first feedback acquisition section 42 outputs the input new concept and/or new semantic relationship information to the semantic network storage section 31, and causes the input new concept and/or new semantic relationship information to be stored therein. In other words, a new node and/or a new link are/is added to a semantic network. In this manner, it becomes possible to sequentially expand or segmentalize a semantic network, and modify an error, through interaction with the user.

### • Labeling proposal section 43

The labeling proposal section 43 proposes new labeling to the user. The labeling proposal section 43 acquires a labeling candidate list from the sort algorithm 36, and outputs the acquired labeling candidate list to the user.

### • Second feedback acquisition section 44

The second feedback acquisition section 44 receives an input of a feedback from the user to information output by the labeling proposal section 43 to the user. For example, the second feedback acquisition section 44 receives an input of information indicating availability/unavailability of labeling for each of the data included in the labeling candidate list. Then, in a case where labeling of the proposed data is employed, the second feedback acquisition section 44 outputs a data ID and a label of the employed data to the data & label storage section 32, and causes the data ID and the label to be stored therein. In other words, a label is newly associated with unlabeled data. In this manner, it becomes possible to sequentially generate a learning data set including a larger number of concepts, through interaction with the user.

### <3.4. UI example>

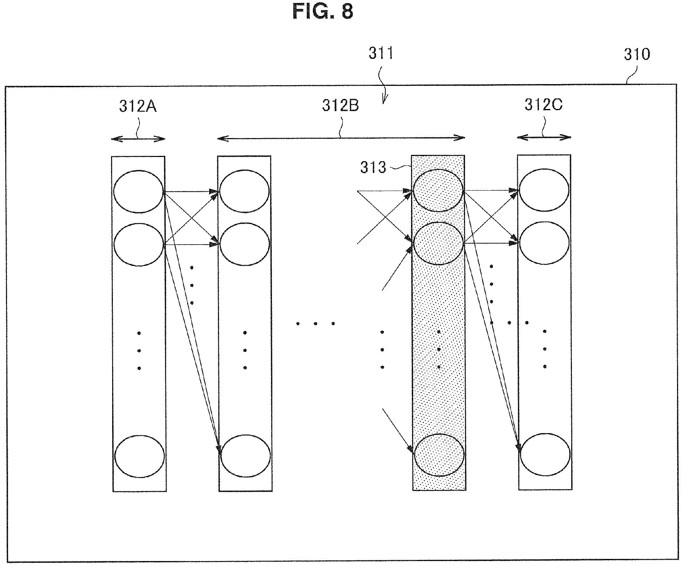

Specific UI examples will be described below with reference to FIGS. 8 to 23.

Here, as an example, the description will be given assuming that classification target data is an image. In this case, as a label, a concept indicating a component included in the image, a concept indicating meaning indicated by the image, a concept indicating a context in which the image is captured, and the like can be considered.

Note that, a UI is generated by the server 100 (e.g. the output control section 135), and displayed by the terminal apparatus 200 (e.g. the output section 220), for example. Then, a user input on the UI is received by the terminal apparatus 200 (e.g. the acquisition section 131, the input section 210), and is acquired by the server 100 (e.g. the acquisition section 131), for example.

### <3.4.1. First algorithm>

A first algorithm is an algorithm that focuses attention on an ignition status of the entire certain intermediate layer.

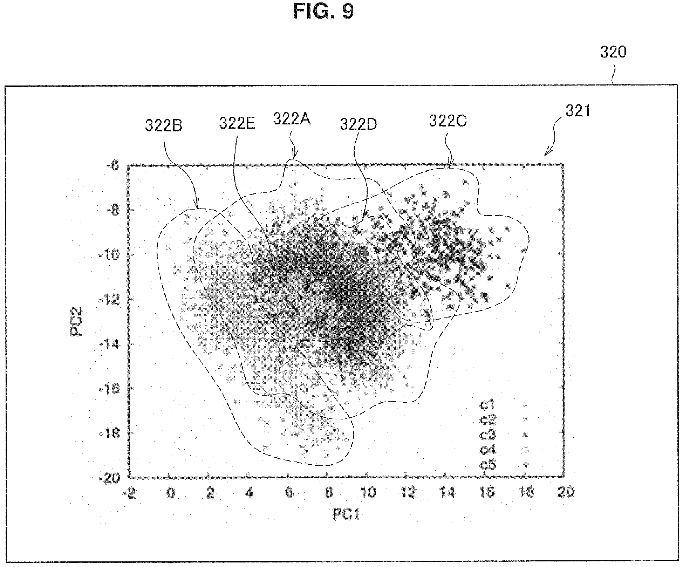

FIG. 8 is a diagram illustrating an example of a UI according to the present embodiment. As illustrated in FIG. 8, a UI 310 includes information 311 indicating a configuration of a neural network. The neural network corresponds to a classification model stored in the classification model storage section 33, and includes an input layer 312A, a plurality of intermediate layers 312B, and an output layer 312C. The user can select one intermediate layer from among the plurality of intermediate layers 312B. When one intermediate layer is selected, a screen transitions to a UI illustrated in FIG. 9. Here, as an example, an intermediate layer 313 is assumed to be selected.

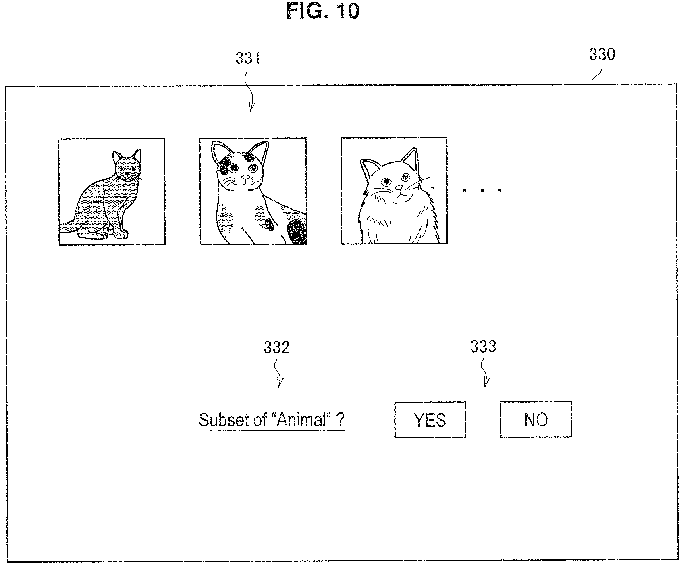

FIG. 9 is a diagram illustrating an example of a UI according to the present embodiment. As illustrated in FIG. 9, a UI 320 includes information 321 indicating ignition statuses of the intermediate layer. The ignition statuses are ignition statuses of a plurality of units constituting the intermediate layer 313 selected by the user on the UI 310. The ignition statuses correspond to semantic network proposal information. As illustrated in FIG. 9, in the information 321 indicating the ignition statuses of the intermediate layer, a clustering result of the ignition statuses may be included. The user can select one cluster from among a plurality of clusters 322A to 322E included in the ignition statuses. When one cluster is selected, a screen transitions to a UI illustrated in FIG. 10. Here, as an example, the cluster 322A is assumed to be selected. Note that, the clustering may be performed by the user. In this case, the user designates a cluster by designating an arbitrary region.

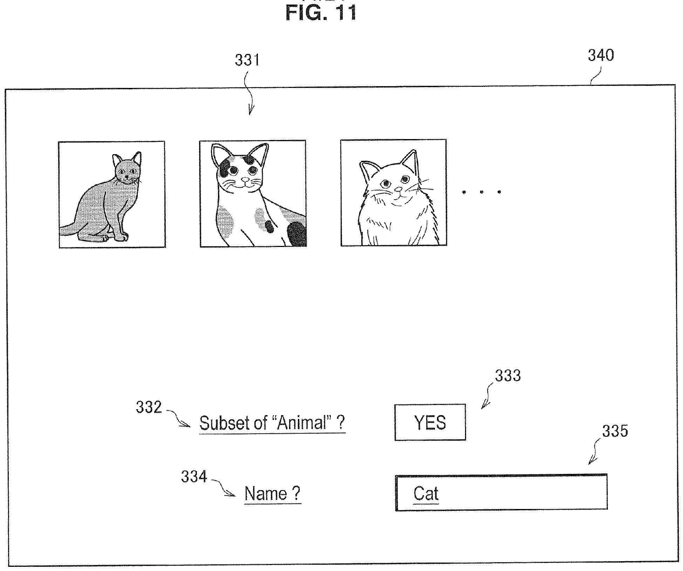

FIG. 10 is a diagram illustrating an example of a UI according to the present embodiment. A UI 330 illustrated in FIG. 10 is a UI that proposes an IS-A relationship. The UI 330 includes a plurality of images 331. The plurality of images 331 are images included in the cluster 322A selected by the user on the UI 320. In addition, as illustrated in FIG. 10, the UI 330 includes a question sentence 332 asking whether the plurality of images 331 is "a subset of "animal"?". The user can select a response 333 to the question sentence 332. Here, as an example, YES is assumed to be selected as the response 333. When YES is selected, a screen transitions to a UI illustrated in FIG. 11. Note that, in a case where NO is selected as the response 333, the system 1 may propose a concept replaceable with "animal", or may request a user input. In addition, the system 1 may request a user input of information indicating what subset, in place of the question sentence 332.

FIG. 11 is a diagram illustrating an example of a UI according to the present embodiment, and a UI 340 illustrated in FIG. 11 is a UI that proposes an IS-A relationship. As illustrated in FIG. 11, the UI 340 includes a question sentence 334 asking a subset name, and an input form 335 for inputting a response to the question sentence 334, in addition to the UI components included in the UI 330. Here, because the images 331 are images of cats, "cat" is input. The system 1 thereby acquires a new semantic network, that is to say, a new concept "cat", and semantic relationship information indicating such an IS-A relationship between "cat" and "animal" that "cat" is "animal". Note that, the system 1 may propose the concept "cat" itself instead of requesting a user input using the input form 335.

The semantic network proposal section 41 and the first feedback acquisition section 42 are concerned with the UIs 310 to 340 proposing the semantic network that have been described above. The plurality of images 331, the question sentence 332, and the question sentence 334 correspond to semantic network proposal information. In addition, the response 333 and an input to the input form 335 are acquired by the first feedback acquisition section 42.

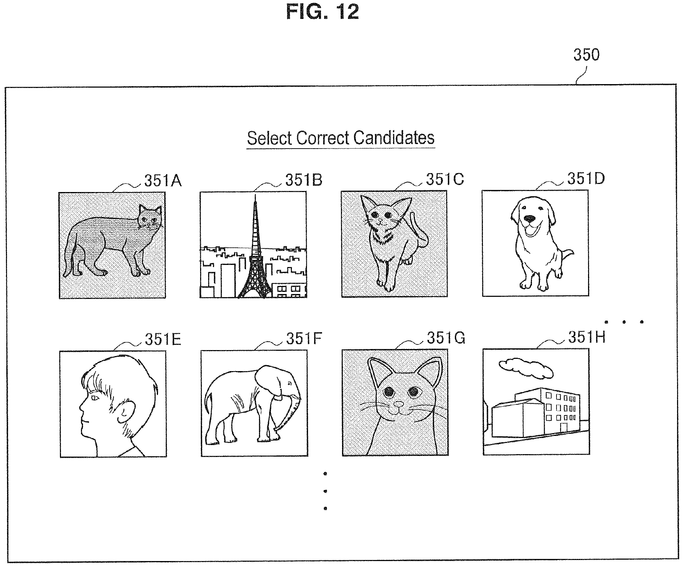

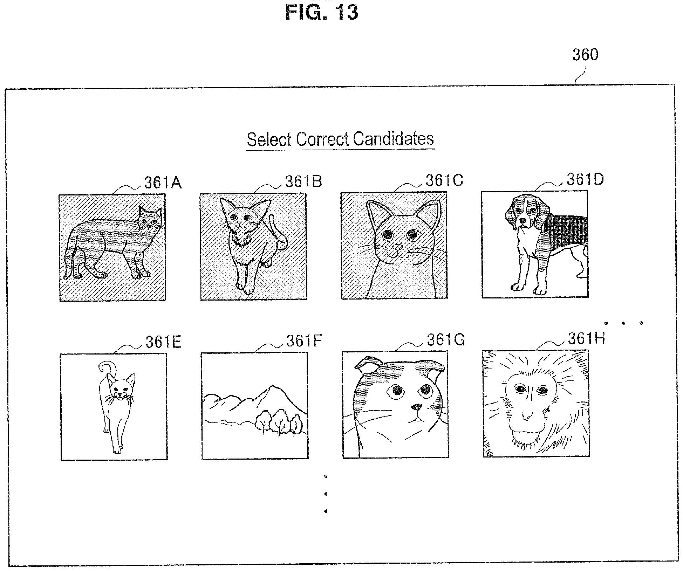

When a new semantic network is learned by such a UI, labeling regarding the new semantic network, and learning of a classification model can be performed. The detailed description will be given below with reference to FIGS. 12 and 13.

FIG. 12 is a diagram illustrating an example of a UI according to the present embodiment. A UI 350 illustrated in FIG. 12 is a UI that proposes labeling. The UI 350 includes a plurality of images 351A to 351H. These images are images included in an unlabeled data list, with which "cat" input on the UI 340 can be associated. The user selects appropriate images to be labeled with "cat", from among the plurality of images 351A to 351H. Here, as an example, the images 351A, 351C, and 351G are selected. By the selection, a new label "cat" is affixed to the images 351A, 351C, and 351G, and content in the data & label storage section 32 is updated. Then, learning is performed by the model learning algorithm 34 in accordance with the updated content. The learning is performed in real time behind the image selection performed by the user. For example, a classification model is learned each time the user selects an image. In the system 1, when a classification model is learned, a sort result in the sort algorithm 36 sometimes changes. In this case, a screen transitions to a UI illustrated in FIG. 13.

FIG. 13 is a diagram illustrating an example of a UI according to the present embodiment. A UI 360 illustrated in FIG. 13 is a UI that proposes labeling. The UI 360 includes a plurality of images 361A to 361H. It can be seen that, on the UI 360, the images 351A, 351C, and 351G that have been selected on the UI 350 are arranged at the beginning as the images 361A, 361B, and 361C, and new images are also displayed. In this manner, it becomes possible for the user to further select appropriate images to be labeled, from among a labeling candidate list sorted more appropriately.

The labeling proposal section 43 and the second feedback acquisition section 44 are concerned with the UIs 350 and 360 proposing labeling that have been described above. The plurality of images 351A to 351H and 361A to 361H correspond to images included in the labeling candidate list. The selection of images to be labeled is acquired by the second feedback acquisition section 44.

An example of a flow of a series of UI transitions has been described above. Another UI example will be described below.

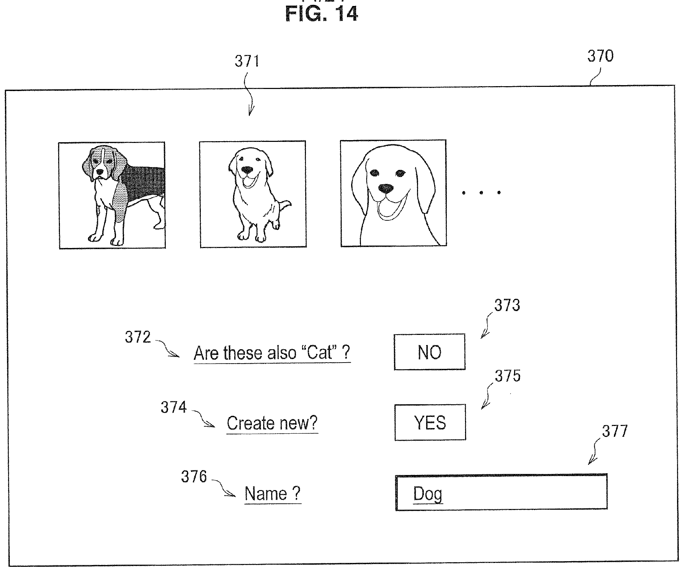

FIG. 14 is a diagram illustrating an example of a UI according to the present embodiment. A UI 370 illustrated in FIG. 14 is a UI that proposes an IS-A relationship. The UI 370 is displayed for additionally proposing an input of a semantic network, after the interaction on the UIs 330 and 340, for example. As illustrated in FIG. 14, the UI 370 includes a plurality of images 371, and a question sentence 372 asking whether the plurality of images 371 is "a subset of "cat"?". When the user selects NO as a response 373 to the question sentence 372, a question sentence 374 indicating whether to create a new concept is displayed. When the user selects YES as a response 375 to the question sentence 374, a question sentence 376 asking a subset name of the plurality of images 371, and an input form 377 for inputting a response to the question sentence 376 are displayed. Here, as an example, "dog" is input. Note that, the images 371, the question sentence 372, the question sentence 374, and the question sentence 376 correspond to semantic network proposal information.

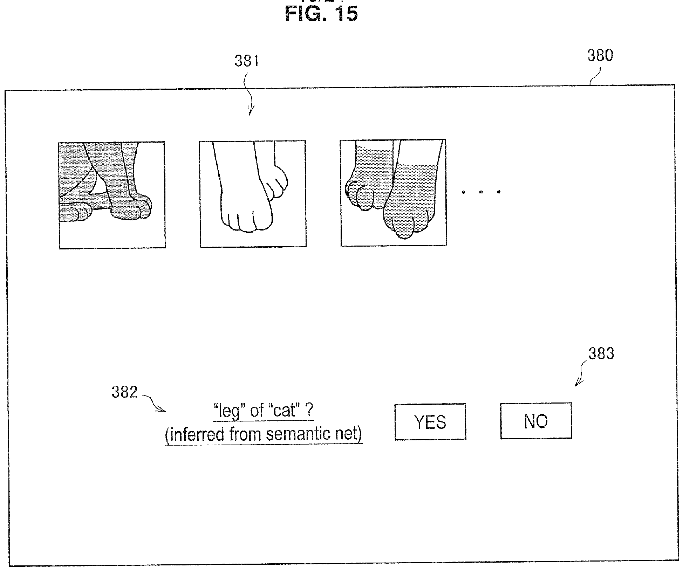

FIG. 15 is a diagram illustrating an example of a UI according to the present embodiment. A UI 380 illustrated in FIG. 15 is a UI that proposes an IS-PART-OF relationship. For example, the UI 380 is displayed after the UI 320 in place of the UI 330. As illustrated in FIG. 15, the UI 380 includes a plurality of images 381, and a question sentence 382 asking whether the plurality of images 381 are ""legs" of "cat"?". The user can select a response 383 to the question sentence 382. Note that, the images 381 and the question sentence 382 correspond to semantic network proposal information.

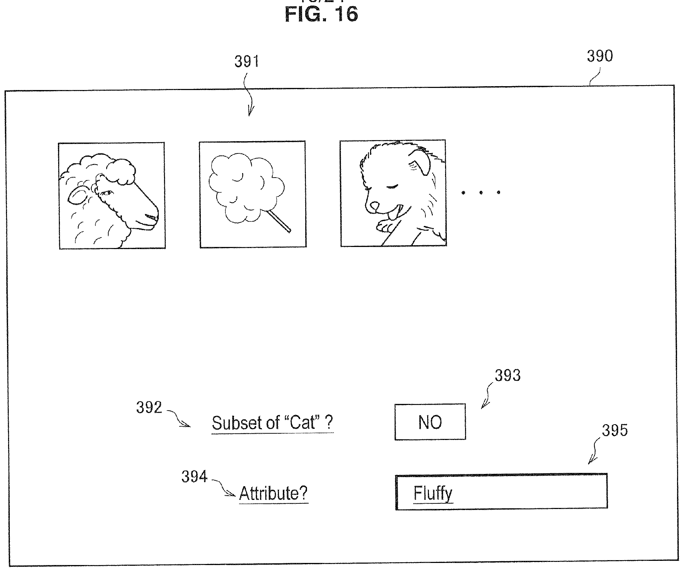

FIG. 16 is a diagram illustrating an example of a UI according to the present embodiment. A UI 390 illustrated in FIG. 16 is a UI that proposes an ATTRIBUTE relationship. For example, the UI 390 is displayed after the UI 320 in place of the UI 330. As illustrated in FIG. 16, the UI 390 includes a plurality of images 391, and a question sentence 392 asking whether the plurality of images 391 is "a subset of "cat"?". When the user selects NO as a response 393 to the question sentence 392, a question sentence 394 asking an attribute of the plurality of images 391, and an input form 395 for inputting a response to the question sentence 394 are displayed. Here, because the images 391 are images of objects having a fluffy attribute such as a sheep, cotton candy, and a thick-coated dog, "fluffy" is input. Note that, the images 391, the question sentence 392, and the question sentence 394 correspond to semantic network proposal information.

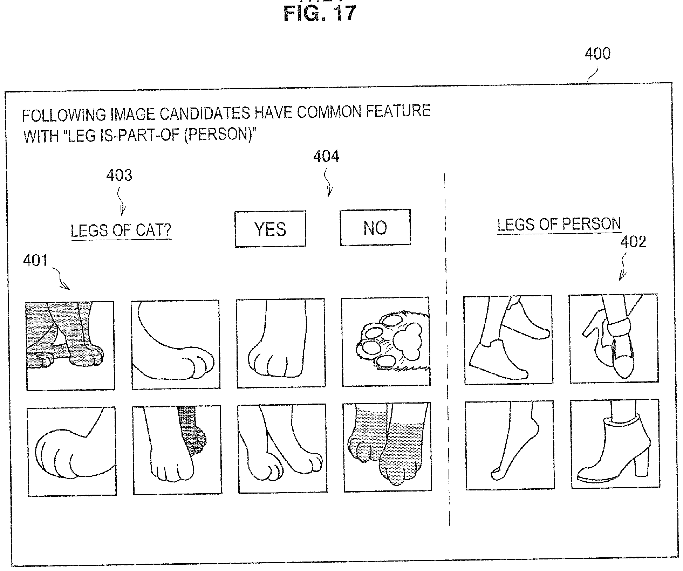

FIG. 17 is a diagram illustrating an example of a UI according to the present embodiment. A UI 400 illustrated in FIG. 17 is an example of a UI that proposes an IS-PART-OF relationship. For example, the UI 400 is displayed after the UI 320 in place of the UI 330. As illustrated in FIG. 17, the UI 400 includes a plurality of images 401 and a plurality of images 402. The plurality of images 402 are "legs of person". Then, the plurality of images 401 are images of "cat" having common features with "legs of person". As information indicating a semantic network inferred from the label "legs of person" associated with the plurality of images 401, the system 1 displays a question sentence 403 asking whether the images are "legs of cat", and obtains a response 404. There may be a plurality of inference sources, and for example, "legs of gorilla" and "legs of horse" may be displayed in addition to "legs of person" as the plurality of images 402. The plurality of images 401 and 402, and the question sentence 403 correspond to semantic network proposal information. Especially, the semantic network proposal information in this UI includes information that proposes a new semantic network "legs of cat" itself.

Examples of UIs in the first algorithm have been described above. A second algorithm will be described below.

### <3.4.2. Second algorithm>

A second algorithm is an algorithm that focuses attention on an ignition status of one node of a certain intermediate layer.

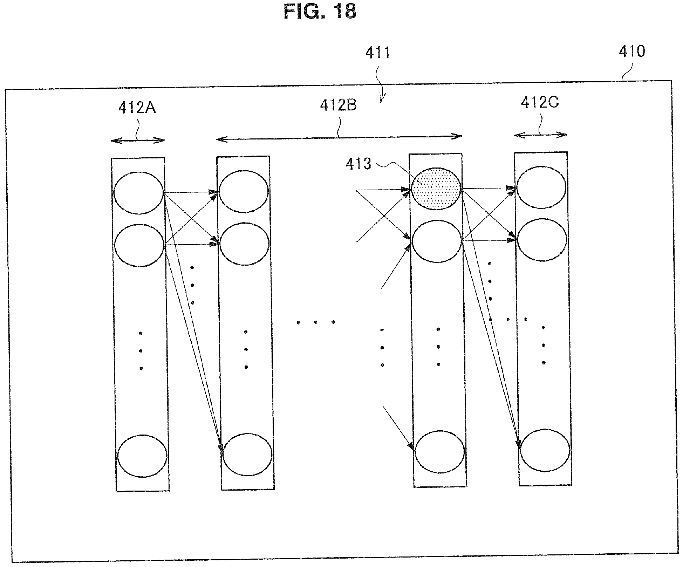

FIG. 18 is a diagram illustrating an example of a UI according to the present embodiment. As illustrated in FIG. 18, a UI 410 includes information 311 indicating a configuration of a neural network. The neural network corresponds to a classification model stored in the classification model storage section 33, and includes an input layer 412A, a plurality of intermediate layers 412B, and an output layer 412C. The user can select one node included in an intermediate layer, from among the plurality of intermediate layer 412B. Here, as an example, a node 413 is assumed to be selected.

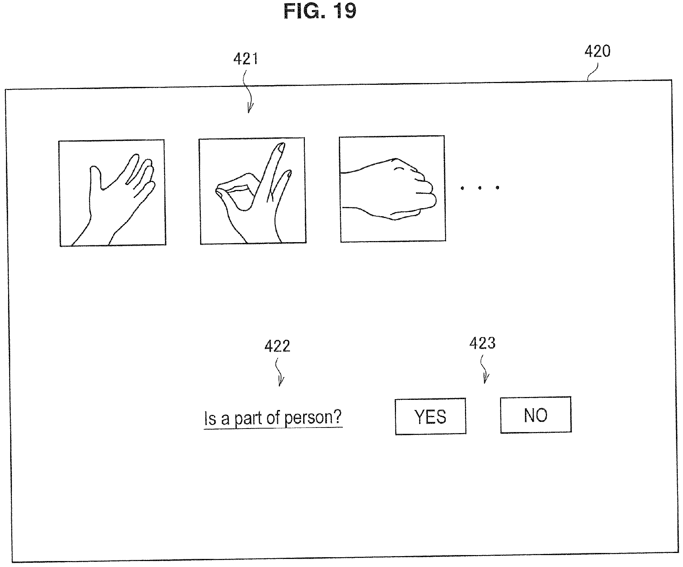

UIs to be displayed after the node is selected on the UI 410 are similar to those in the first algorithm. For example, after the UI 410, a UI similar to the UI 320 is displayed. Nevertheless, on the UI, information indicating ignition statuses of the one node 413 of the intermediate layer that has been selected by the user on the UI 410 is displayed. The user selects a cluster from the ignition statuses. When a cluster is selected, a screen transitions to a UI illustrated in FIG. 19.

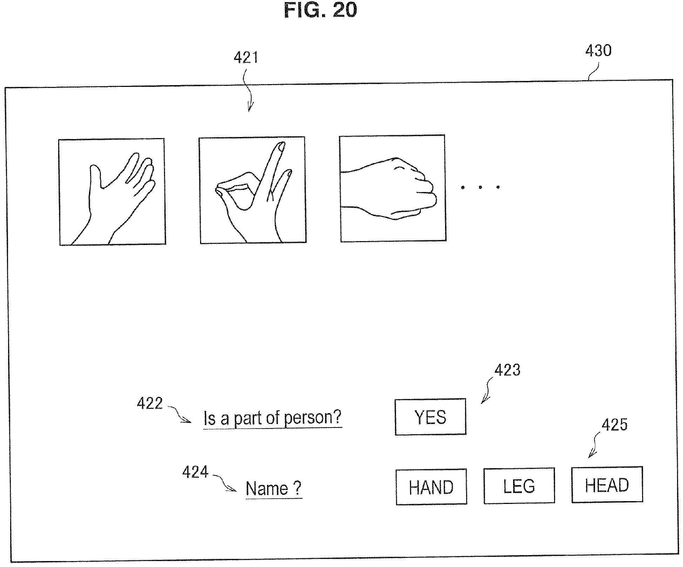

FIG. 19 is a diagram illustrating an example of a UI according to the present embodiment. A UI 420 illustrated in FIG. 19 is a UI that proposes an IS-PART-OF relationship. The UI 420 includes a plurality of images 421, and a question sentence 422 asking whether each of the plurality of images 421 "is a part of person?". The user can select a response 423 to the question sentence 422. Here, as an example, YES is assumed to be selected as the response 423. When YES is selected, a screen transitions to a UI illustrated in FIG. 20.

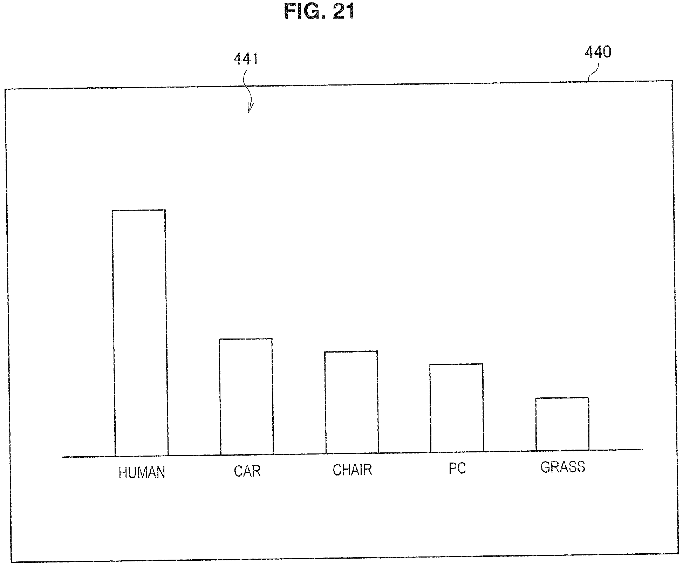

FIG. 20 is a diagram illustrating an example of a UI according to the present embodiment. A UI 430 illustrated in FIG. 20 is a UI that proposes an IS-PART-OF relationship. As illustrated in FIG. 20, the UI 430 includes a question sentence 424 asking a part name, and options 425 for selecting a response to the question sentence 424, in addition to the UI components included in the UI 420. The options can be proposed on the basis of a learning status, for example, as described later with reference to FIG. 21. Here, because the images 421 are images of hands of a person, "hand" is selected. The system 1 thereby acquires a new semantic network, that is to say, an IS-PART-OF relationship between "person" and "hand" such as "hand of person".

FIG. 21 is a diagram illustrating an example of a UI according to the present embodiment. FIG. 21 is a UI indicating a reason for proposing the IS-PART-OF relationship. A UI 440 illustrated in FIG. 21 can be displayed as a reason for the options 425 on the UI 430, for example. As illustrated in FIG. 21, the UI 440 includes a co-occurrence histogram 441. The co-occurrence histogram 441 indicates a co-occurrence relationship between a label X corresponding to a certain intermediate layer or cluster, and another label Y, and is displayed as a reason for performing such a proposal that the "label X" IS-PART-OF" the label Y". Here, it is indicated that, among labels such as "human", "car", "chair", a "Personal Computer (PC)", and "grass", the degree of "human" and "hand" co-occurring is high. In other words, the co-occurrence histogram 441 indicates a reason for proposal of such a semantic network that "hand" IS-PART-OF "human".

The semantic network proposal section 41 and the first feedback acquisition section 42 are concerned with the UIs 420 to 440 proposing a semantic network or indicating a reason that have been described above. The plurality of images 421, the question sentence 422, the question sentence 424, the options 425, and the co-occurrence histogram 441 correspond to semantic network proposal information. In addition, the selection of the response 423 and the options 425 is acquired by the first feedback acquisition section 42.

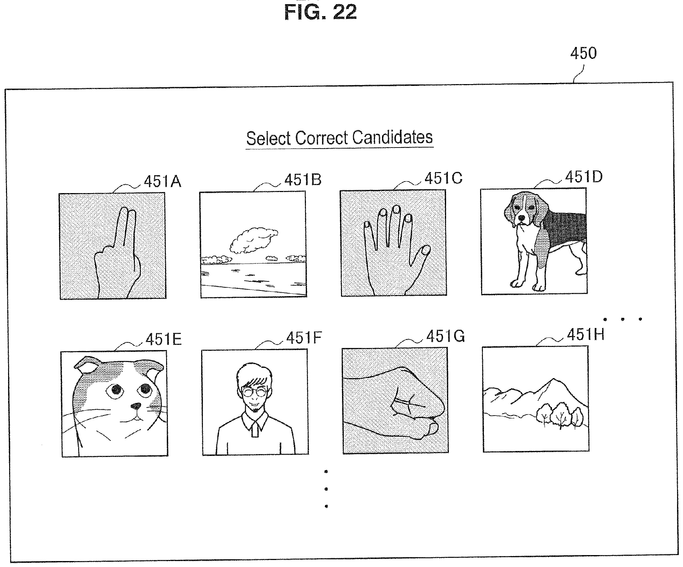

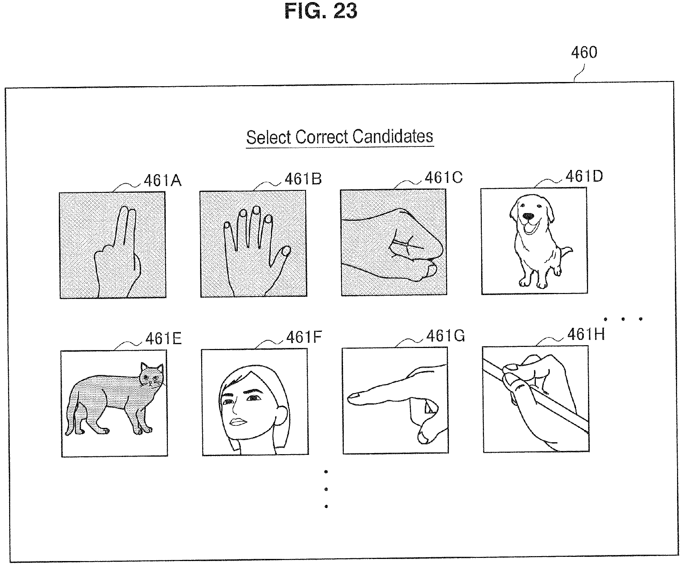

When a new semantic network is learned by such a UI, labeling regarding the new semantic network and learning of a classification model can be performed. The detailed description will be given with reference to FIGS. 22 and 23.

FIG. 22 is a diagram illustrating an example of a UI according to the present embodiment. A UI 450 illustrated in FIG. 22 is a UI that proposes labeling. The UI 450 includes a plurality of images 451A to 451H. These images are images included in an unlabeled data list, with which "hand of person" input on the UI 430 can be associated. The user selects appropriate images to be labeled with "hand of person", from among the plurality of images 451A to 451H. Here, as an example, the images 451A, 451C, and 451G are selected. In other words, by the selection, a new label "hand of person" is affixed to the images 451A, 451C, and 451G, and content in the data & label storage section 32 is updated. Then, learning is performed by the model learning algorithm 34 in accordance with the updated content. The learning is performed in real time behind the image selection performed by the user. For example, a classification model is learned each time the user selects an image. In the system 1, when a classification model is learned, a sort result in the sort algorithm 36 sometimes changes. In this case, a screen transitions to a UI illustrated in FIG. 23.

FIG. 23 is a diagram illustrating an example of a UI according to the present embodiment. A UI 460 illustrated in FIG. 23 is a UI that proposes labeling. The UI 460 includes a plurality of images 461A to 461H. It can be seen that, on the UI 360, the images 451A, 451C, and 451G that have been selected on the UI 450 are arranged at the beginning as the images 461A, 461B, and 461C, and new images are also displayed. In this manner, it becomes possible for the user to further select appropriate images to be labeled, from among a labeling candidate list sorted more appropriately.

The labeling proposal section 43 and the second feedback acquisition section 44 are concerned with the UIs 450 and 460 proposing labeling that have been described above. The plurality of images 451A to 451H and 461A to 461H correspond to images included in the labeling candidate list. The selection of images to be labeled is acquired by the second feedback acquisition section 44.

Examples of UIs in the second algorithm have been described above.

### <3.4.3. Supplement>

Note that, excluding the UIs 310 and 410, the UIs described in each of the algorithms can be displayed in both of the algorithms. For example, the UI 440 may be displayed in the first algorithm.

In addition, in the above description, an example in which a UI transitions has been shown. Alternatively, two or more UIs may be displayed together.

In addition, on a UI that proposes labeling, such as the UI 350, for example, an image that can be similarly labeled may be newly collected from the Internet or the like, and added.

### <3.5. Modified example>

In the above-described UI examples, images have been used as an example of data. Nevertheless, the present technology is not limited to this example.

For example, data may be a sound. In this case, as a label (i.e. concept), a mood, chord progression, a phrase group, a specific playing technique, or the like can be considered. In addition, as a semantic network, such an IS-A relationship as a mood of a phrase group, such an IS-PART-OF relationship or an ATTRIBUTE relationship as a certain playing technique of jazz, or the like can be considered. For example, it is assumed that there is a data set associated with a label indicating a mood of the entire music. In this case, the system 1 can propose a possibility of a new concept to the user by displaying a phrase group from among the entire data set, for certain specific chord progression, which is part of the music.

For example, data may be a document. In this case, a label (i.e. concept) is a genre of the document, a topic, a phrase, or a sentence that frequently appears in the genre, or the like. For example, it is assumed that there is a data set associated with a label indicating a genre. In this case, in a case where a certain sentence or phrase mentions a certain topic in a specific genre, the system 1 can propose the topic as a new concept.

Aside from these, data may be a sensor signal, a moving image, or the like.

In addition, in classification target data, different types of data such as an image, a moving image, and a sensor signal, for example, may mixedly exist.

### «4. Hardware configuration example»

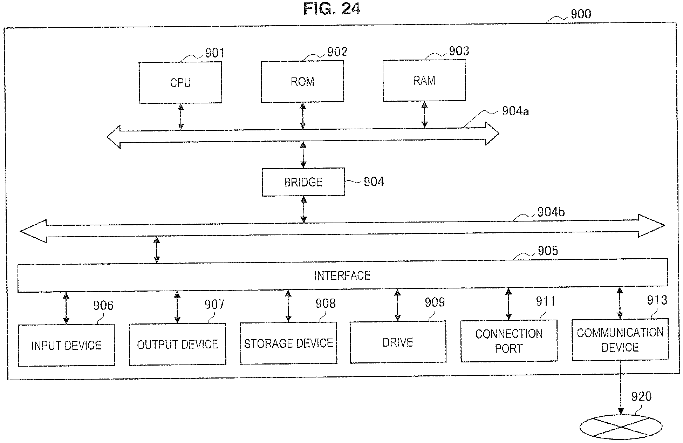

Finally, a hardware configuration of an information processing apparatus according to the present embodiment will be described with reference to FIG. 24. FIG. 24 is a block diagram illustrating an example of the hardware configuration of the information processing apparatus according to the present embodiment. Meanwhile, an information processing apparatus 900 illustrated in FIG. 24 may realize the server 100 or the terminal apparatus 200 illustrated in FIG. 4, for example. Information processing by the server 100 or the terminal apparatus 200 according to the present embodiment is realized according to cooperation between software and hardware described below.

As illustrated in FIG. 24, the information processing apparatus 900 includes a central processing unit (CPU) 901, a read only memory (ROM) 902, a random access memory (RAM) 903 and a host bus 904a. In addition, the information processing apparatus 900 includes a bridge 904, an external bus 904b, an interface 905, an input device 906, an output device 907, a storage device 908, a drive 909, a connection port 911 and a communication device 913. The information processing apparatus 900 may include a processing circuit such as a DSP or an ASIC instead of the CPU 901 or along therewith.

The CPU 901 functions as an arithmetic processing device and a control device and controls the overall operation in the information processing apparatus 900 according to various programs. Further, the CPU 901 may be a microprocessor. The ROM 902 stores programs, operation parameters and the like used by the CPU 901. The RAM 903 temporarily stores programs used in execution of the CPU 901, parameters appropriately changed in the execution, and the like. The CPU 901 can form the control section 130 or the control section 250 illustrated in FIG. 4, for example.

The CPU 901, the ROM 902 and the RAM 903 are connected by the host bus 904a including a CPU bus and the like. The host bus 904a is connected with the external bus 904b such as a peripheral component interconnect/interface (PCI) bus via the bridge 904. Further, the host bus 904a, the bridge 904 and the external bus 904b are not necessarily separately configured and such functions may be mounted in a single bus.

The input device 906 is realized by a device through which a user inputs information, such as a mouse, a keyboard, a touch panel, a button, a microphone, a switch, and a lever. In addition, the input device 906 may be a remote control device using infrared ray or other electric waves or external connection equipment such as a mobile phone or a PDA corresponding to operation of the information processing apparatus 900, for example. Furthermore, the input device 906 may include an input control circuit or the like which generates an input signal on the basis of information input by the user using the aforementioned input means and outputs the input signal to the CPU 901, for example. The user of the information processing apparatus 900 may input various types of data or order a processing operation for the information processing apparatus 900 by operating the input device 906.

In addition to the above, the input device 906 can be formed by a device that detects information related to the user. For example, the input device 906 can include various sensors such as an image sensor (a camera, for example), a depth sensor (a stereo camera, for example), an acceleration sensor, a gyro sensor, a geomagnetic sensor, an optical sensor, a sound sensor, a distance measurement sensor, and a force sensor. Also, the input device 906 may acquire information related to the state of the information processing apparatus 900 itself such as the posture and the moving velocity of the information processing apparatus 900 and information related to a surrounding environment of the information processing apparatus 900 such as brightness or noise around the information processing apparatus 900. Also, the input device 906 may include a GNSS module that receives a GNSS signal (a GPS signal from a global positioning system (GPS) satellite, for example) from a global navigation satellite system (GNSS) satellite and measures position information including the latitude, the longitude, and the altitude of the device. In addition, the input device 906 may detect the position through Wi-Fi (registered trademark), transmission and reception to and from a mobile phone, a PHS, a smartphone, or the like, near-field communication, or the like, in relation to the position information. The input device 906 can form the input section 210 illustrated in FIG. 4, for example.

The output device 907 is formed by a device that may visually or aurally notify the user of acquired information. As such devices, there is a display device such as a CRT display device, a liquid crystal display device, a plasma display device, an EL display device, a laser projector, an LED projector or a lamp, a sound output device such as a speaker and a headphone, a printer device and the like. The output device 907 outputs results acquired through various processes performed by the information processing apparatus 900, for example. Specifically, the display device visually displays results acquired through various processes performed by the information processing apparatus 900 in various forms such as text, images, tables and graphs. On the other hand, the sound output device converts audio signals including reproduced sound data, audio data and the like into analog signals and aurally outputs the analog signals. The aforementioned display device or the aforementioned sound output device may form the output section 220 illustrated in FIG. 4, for example.

The storage device 908 is a device for data storage, formed as an example of a storage section of the information processing apparatus 900. For example, the storage device 908 is realized by a magnetic storage device such as an HDD, a semiconductor storage device, an optical storage device, a magneto-optical storage device or the like. The storage device 908 may include a storage medium, a recording device for recording data on the storage medium, a reading device for reading data from the storage medium, a deletion device for deleting data recorded on the storage medium and the like. The storage device 908 stores programs and various types of data executed by the CPU 901, various types of data acquired from the outside and the like. The storage device 908 may form the storage section 120 or the storage section 240 illustrated in FIG. 4, for example.

The drive 909 is a reader/writer for storage media and is included in or externally attached to the information processing apparatus 900. The drive 909 reads information recorded on a removable storage medium such as a magnetic disc, an optical disc, a magneto-optical disc or a semiconductor memory mounted thereon and outputs the information to the RAM 903. In addition, the drive 909 can write information on the removable storage medium.

The connection port 911 is an interface connected with external equipment and is a connector to the external equipment through which data may be transmitted through a universal serial bus (USB) and the like, for example.

The communication device 913 is a communication interface formed by a communication device for connection to a network 920 or the like, for example. The communication device 913 is a communication card or the like for a wired or wireless local area network (LAN), long term evolution (LTE), Bluetooth (registered trademark) or wireless USB (WUSB), for example. In addition, the communication device 913 may be a router for optical communication, a router for asymmetric digital subscriber line (ADSL), various communication modems or the like. For example, the communication device 913 may transmit/receive signals and the like to/from the Internet and other communication apparatuses according to a predetermined protocol, for example, TCP/IP or the like. The communication device 913 may form the communication section 110 or the communication section 230 illustrated in FIG. 4, for example.

Further, the network 920 is a wired or wireless transmission path of information transmitted from devices connected to the network 920. For example, the network 920 may include a public circuit network such as the Internet, a telephone circuit network or a satellite communication network, various local area networks (LANs) including Ethernet (registered trademark), a wide area network (WAN) and the like. In addition, the network 920 may include a dedicated circuit network such as an internet protocol-virtual private network (IP-VPN).

Hereinbefore, an example of a hardware configuration capable of realizing the functions of the information processing apparatus 900 according to the present embodiment is shown. The respective components may be implemented using universal members, or may be implemented by hardware specific to the functions of the respective components. Accordingly, according to a technical level at the time when the embodiments are executed, it is possible to appropriately change hardware configurations to be used.

In addition, a computer program for realizing each of the functions of the information processing apparatus 900 according to the present embodiment as described above may be created, and may be mounted in a PC or the like. Furthermore, a computer-readable recording medium on which such a computer program is stored may be provided. The recording medium is a magnetic disc, an optical disc, a magneto-optical disc, a flash memory, or the like, for example. Further, the computer program may be delivered through a network, for example, without using the recording medium.

### «5. Conclusion»

An embodiment of the present disclosure has been described in detail above with reference to FIGS. 1 to 24. As described above, the system 1 according to the present embodiment acquires a semantic network, identification information of data, and a label, and learns a classification model that classifies the data into the label, on the basis of the semantic network, the identification information, and the label that have been acquired. By performing learning considering a semantic network, it become possible to perform efficient learning that excludes a classification model in which a relationship between concepts in the semantic network is not correctly represented, for example.

In addition, the system 1 performs learning on the basis of a feedback to output information regarding a learning result. The system 1 can efficiently perform learning by repeatedly receiving feedbacks in the process of learning.

For example, the system 1 outputs information that proposes an input of a new semantic network, and receives a feedback. It thereby becomes possible to sequentially expand or segmentalize a semantic network, and modify an error, through interaction with the user.

In addition, for example, the system 1 outputs information that proposes association of a new label with data, and receives a feedback. It thereby becomes possible to sequentially generate a learning data set including a larger number of concepts, through interaction with the user. It thereby becomes possible to perform learning exceeding the range of a prepared data set, and perform sufficient learning even with a small number of learning data sets.

In addition, the system 1 outputs output values of an intermediate layer of a neural network, a clustering result of the output values, a co-occurrence histogram, and the like, in the process of proposing a new semantic network or association of a label. It thereby becomes possible to provide a reason for new proposal to the user, and support a user input.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, in the above-described embodiment, learning has been described to be performed on the basis of an ignition status of an intermediate layer. Nevertheless, the present technology is not limited to this example. For example, learning may be performed on the basis of an ignition status of an output layer.

Note that it is not necessary for the processing described in this specification with reference to the flowchart and the sequence diagram to be executed in the order shown in the flowchart. Some processing steps may be performed in parallel. Further, some of additional steps can be adopted, or some processing steps can be omitted.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) An information processing apparatus including:
   an acquisition section configured to acquire a semantic network, identification information of data, and a label; and
   a learning section configured to learn a classification model that classifies the data into the label, on a basis of the semantic network, the identification information, and the label that have been acquired by the acquisition section.
(2) The information processing apparatus according to (1), in which the label corresponds to a node forming the semantic network.
(3) The information processing apparatus according to (2), in which the semantic network includes information indicating a relationship between the nodes.
(4) The information processing apparatus according to (3), in which the learning section learns using a learning criterion that is based on the relationship between the nodes in the semantic network.
(5) The information processing apparatus according to any one of (1) to (4), in which the learning section performs learning on a basis of a feedback to output information regarding a learning result.
(6) The information processing apparatus according to (5), in which the output information includes information that proposes an input of the semantic network that is new.
(7) The information processing apparatus according to (6), in which the output information includes information that proposes the semantic network that is new.
(8) The information processing apparatus according to (7), in which the output information includes information indicating the semantic network inferred from another label associated with other data.
(9) The information processing apparatus according to any one of (5) to (8), in which the output information includes information that proposes association of the label that is new, with the data.
(10) The information processing apparatus according to any one of (5) to (9), in which
   the classification model is mounted by a neural network, and
   the output information includes output values of one or more units included in the neural network.
(11) The information processing apparatus according to (10), in which the output information includes a clustering result of the output values.
(12) The information processing apparatus according to (10) or (11), in which the one or more units correspond to a plurality of units constituting an intermediate layer.
(13) The information processing apparatus according to (10) or (11), in which the one or more units correspond to one unit of an intermediate layer.
(14) The information processing apparatus according to any one of (5) to (13), in which the output information includes a co-occurrence histogram of the label.
(15) A method executed by a processor, the method including:
   acquiring a semantic network, identification information of data, and a label; and
   learning a classification model that classifies the data into the label, on a basis of the semantic network, the identification information, and the label that have been acquired.

### Reference Signs List

- 1: system
- 31: semantic network storage section
- 32: data & label storage section
- 33: classification model storage section
- 34: model learning algorithm
- 35: semantic network proposal algorithm
- 36: sort algorithm
- 41: semantic network proposal section
- 42: first feedback acquisition section
- 43: labeling proposal section
- 44: second feedback acquisition section
- 100: server
- 110: communication section
- 120: storage section
- 130: control section
- 131: acquisition section
- 133: learning section
- 135: output control section
- 200: terminal apparatus
- 210: input section
- 220: output section
- 230: communication section
- 240: storage section
- 250: control section

## Claims

1. An information processing apparatus comprising:
an acquisition section configured to acquire a semantic network, identification information of data, and a label; and
a learning section configured to learn a classification model that classifies the data into the label, on a basis of the semantic network, the identification information, and the label that have been acquired by the acquisition section.

2. The information processing apparatus according to claim 1, wherein the label corresponds to a node forming the semantic network.

3. The information processing apparatus according to claim 2, wherein the semantic network includes information indicating a relationship between the nodes.

4. The information processing apparatus according to claim 3, wherein the learning section learns using a learning criterion that is based on the relationship between the nodes in the semantic network.

5. The information processing apparatus according to claim 1, wherein the learning section performs learning on a basis of a feedback to output information regarding a learning result.

6. The information processing apparatus according to claim 5, wherein the output information includes information that proposes an input of the semantic network that is new.

7. The information processing apparatus according to claim 6, wherein the output information includes information that proposes the semantic network that is new.

8. The information processing apparatus according to claim 7, wherein the output information includes information indicating the semantic network inferred from another label associated with other data.

9. The information processing apparatus according to claim 5, wherein the output information includes information that proposes association of the label that is new, with the data.

10. The information processing apparatus according to claim 5, wherein
the classification model is mounted by a neural network, and
the output information includes output values of one or more units included in the neural network.

11. The information processing apparatus according to claim 10, wherein the output information includes a clustering result of the output values.

12. The information processing apparatus according to claim 10, wherein the one or more units correspond to a plurality of units constituting an intermediate layer.

13. The information processing apparatus according to claim 10, wherein the one or more units correspond to one unit of an intermediate layer.

14. The information processing apparatus according to claim 5, wherein the output information includes a co-occurrence histogram of the label.

15. An information processing method executed by a processor, the information processing method comprising:
acquiring a semantic network, identification information of data, and a label; and
learning a classification model that classifies the data into the label, on a basis of the semantic network, the identification information, and the label that have been acquired.

## Amended claims

### Amended claims under Art. 19.1 PCT

1. An information processing apparatus comprising:
an acquisition section configured to acquire a semantic network including information indicating a relationship between nodes, identification information of data, and a label corresponding to the node forming the semantic network; and
a learning section configured to learn a classification model that classifies the data into the label, on a basis of the semantic network, the identification information, and the label that have been acquired by the acquisition section, using a learning criterion as to whether a plurality of the labels included in a classification result of the data conforms to the relationship between the nodes in the semantic network.

2. The information processing apparatus according to claim 1, wherein the learning section performs learning on a basis of a feedback to output information regarding a learning result.

3. The information processing apparatus according to claim 2, wherein the output information includes information that proposes an input of the semantic network that is new.

4. The information processing apparatus according to claim 3, wherein the output information includes information that proposes the semantic network that is new.

5. The information processing apparatus according to claim 4, wherein the output information includes information indicating the semantic network inferred from another label associated with other data.

6. The information processing apparatus according to claim 2, wherein the output information includes information that proposes association of the label that is new, with the data.

7. The information processing apparatus according to claim 2, wherein
the classification model is mounted by a neural network, and
the output information includes output values of one or more units included in the neural network.

8. The information processing apparatus according to claim 7, wherein the output information includes a clustering result of the output values.

9. The information processing apparatus according to claim 7, wherein the one or more units correspond to a plurality of units constituting an intermediate layer.

10. The information processing apparatus according to claim 7, wherein the one or more units correspond to one unit of an intermediate layer.

11. The information processing apparatus according to claim 2, wherein the output information includes a co-occurrence histogram of the label.

12. An information processing method executed by a processor, the information processing method comprising:
acquiring a semantic network including information indicating a relationship between nodes, identification information of data, and a label corresponding to the node forming the semantic network; and
learning a classification model that classifies the data into the label, on a basis of the semantic network, the identification information, and the label that have been acquired, using a learning criterion as to whether a plurality of the labels included in a classification result of the data conforms to the relationship between the nodes in the semantic network.
